# EUROPÄISCHE PATENTANMELDUNG

(11) **EP 1 808 333 A1**
(43) Veröffentlichungstag der Anmeldung: **18.07.2007**
(21) Anmeldenummer: 07000384.3
(22) Anmeldetag: 09.01.2007
(51) Int. Cl.: B60Q 1/30, F21S 8/10, G02B 6/00

(54) **Hochgesetzte Bremsleuchte**

(30) Priorität: 09.01.2006 DE 202006000236 U
(71) Anmelder: FER Fahrzeugelektrik GmbH, 99817 Eisenach (DE)
(72) Erfinder: Gotthardt, Frank, Dr., 37077 Göttingen (DE)
(74) Vertreter: Strasser, Wolfgang

(57) **Zusammenfassung**

Die Erfindung betrifft eine hochgesetzte Bremsleuchte für ein Fahrzeug, insbesondere Kraftfahrzeug, die im Fahrzeuginneren hinter einer Heckscheibe (1) mit zueinander in etwa parallelen Hauptflächen angeordnet ist und ihr von einer Lichtquellenanordnung erzeugtes Licht durch diese Heckscheibe (1) hindurch abgibt, wobei die Heckscheibe (1) gegen die Horizontale so geneigt ist, dass sie mit dieser einen spitzen Winkel einschließt. Die Bremsleuchte umfasst einen Lichtleitkörper (2), in den das von der Lichtquellenanordnung kommende Licht so eingekoppelt wird, dass es sich in seinem Inneren als ein zumindest in vertikaler Richtung parallelisiertes Lichtbündel (3') in etwa parallel zur Horizontalen zur Heckscheibe (1) hin ausbreitet, wobei der Lichtleitkörper (2) auf seiner der Heckscheibe zugewandten Vorderseite eine Vielzahl von stegartigen, in vertikaler Richtung übereinander angeordneten Vorsprüngen (10) aufweist, von denen sich jeder in horizontaler Richtung im Wesentlichen über die gesamte Breite der hochgesetzten Bremsleuchte erstreckt und von denen eine Reflexionsfläche (12), die gegen die horizontale um einen vorgebbaren Winkel geneigt ist, und eine in etwa mit dem gleichen Winkel wie die Heckscheibe (1) gegen die Horizontale geneigte Lichtaustrittsfläche (14), wobei der vorgebbare Winkel, um den die Reflexionsfläche (12) gegen die Horizontale geneigt ist, so gewählt ist, dass der von der Reflexionsfläche (12) reflektierte Teil des parallelisierten Lichtbündels (3') nahezu ohne Brechung durch die Lichtaustrittsfläche (14) hindurch und in die Heckscheibe (1) eintritt und in dieser von innen her auf die äußere Hauptfläche mit einem solchen Winkel auftrifft, dass an dieser keine Totalreflexion entsteht.

## Beschreibung

Die Erfindung betrifft eine hochgesetzte Bremsleuchte für ein Fahrzeug, insbesondere Kraftfahrzeug, der im Oberbegriff von Anspruch 1 genannten Art.

Einleitend sei darauf hingewiesen, dass im vorliegenden Zusammenhang die Begriffe "horizontal" und. "vertikal" so verwendet werden, dass sie sich auf eine hochgesetzte Bremsleuchte im eingebauten Zustand beziehen, wobei das Fahrzeug, in welches die Bremsleuchte eingebaut ist, seinerseits auf einer horizontalen Fläche steht.

Gemäß dem Stand der Technik wird für eine hochgesetzte Bremsleuchte das von einer oder mehreren Leuchtdioden abgestrahlte Licht mit Hilfe einer oder mehrerer Fresnel-Linsen parallelisiert und dann durch eine Kissenoptik-Anordnung geleitet, um eine geforderte Lichtverteilung zu erzielen. Dabei können die Fresnel-Linse bzw. -Linsen und die Kissenoptik-Anordnung als getrennte Bauteile ausgebildet oder zu einer so genannten Zwischenlichtscheibe konstruktiv vereint sein.

Diese Art der Konstruktion hat insbesondere bei getönten Heckscheiben und steilen Anstellwinkeln (> 30 °) der Heckscheibe gegen die Horizontale den Nachteil, dass verschiedene Teile des von der Bremsleuchte abgegebenen Lichtes im getönten Glas unterschiedliche Weglängen zurücklegen und daher unterschiedlich stark absorbiert werden. Außerdem sinkt durch den Fresnel-Reflex bei flachen Auftreffwinkeln auf die Heckscheibe der durch diese hindurch gehende Lichtstromanteil ab. Diese beiden Effekte führen in der vertikalen Licht- bzw. Helligkeitsverteilung zu einer starken Asymmetrie, die durch einen höheren Lichtstrom sowie eine konstruktiv aufwendige Umverteilung des Lichtstroms ausgeglichen werden muss.

Demgegenüber liegt der Erfindung die Aufgabe zugrunde, eine hochgesetzte Bremsleuchte der eingangs genannten Art zu schaffen, bei der ohne aufwendige konstruktive Maßnahmen eine in vertikaler Richtung weniger asymmetrische Licht- bzw. Helligkeitsverteilung erreicht werden kann, so dass es möglich ist, eine solche hochgesetzte Bremsleuchte insbesondere auch bei einer Verwendung hinter einer stark getönten Heckscheibe mit Lichtquellen geringerer Intensität zu betreiben.

Zur Lösung dieser Aufgabe sieht die Erfindung die im Anspruch 1 niedergelegten Merkmale vor.

Diesen Maßnahmen liegt die Idee zugrunde, die Heckscheibe nicht mehr als ein zwangsweise mit optischen Verlusten behaftetes, zu Fehlabbildungen führendes Bauteil zu betrachten, sondern sowohl die Innen- als auch die Außenfläche der Heckscheibe als optisch wirksame Elemente in die Gesamtabbildung des von der Lichtquellenanordnung ausgehenden Lichtbündels in den hinter dem betreffenden Fahrzeug liegenden Raum zu integrieren.

Konstruktiv wird dies dadurch gelöst, dass ein optisches Leitelement in Form eines transparenten Lichtleitkörpers vorgesehen wird, in dessen Inneren sich ein zumindest in vertikaler Richtung parallelisiertes Lichtbündel zur Heckscheibe hin ausbreitet.

Zu diesem Zweck kann entweder ein gesondertes optisches Bauteil vorgesehen sein, das zwischen der Lichtquellenanordnung und dem Lichtleitkörper positioniert ist und das von der Lichtquellenanordnung kommende, divergente und/oder konvergente Lichtbündel zumindest in vertikaler Richtung parallelisiert und so auf die von der Heckscheibe abgewandte Rückseite des Lichtleitkörpers projiziert, dass es durch diese hindurch im wesentlichen ohne Brechung in den Lichtleitkörper eintritt und sich in dessen Innerem in etwa parallel zur Horizontalen zur Heckscheibe hin ausbreitet.

Alternativ ist es auch möglich, die zur zumindest teilweisen Parallelisierung des von der Lichtquellenanordnung kommenden Lichts dienende optische Einrichtung mit dem Lichtleitkörper einstückig auszubilden, so dass ein zumindest in vertikaler Richtung parallelisiertes Lichtbündel erst im Inneren des Lichtleitkörpers entsteht, sich dort aber ebenfalls in etwa parallel zur Horizontalen zur Heckscheibe hin ausbreitet.

Auf seiner der Heckscheibe zugewandten Seite weist der Lichtleitkörper eine Vielzahl von stegförmigen bzw. stegartigen Vorsprüngen auf, die sich über die gesamte Breite der hochgesetzten Bremsleuchte erstrecken und in die das von der Rückseite des Lichtleitkörpers kommende, parallelisierte Lichtbündel so eintritt, dass es in eine Vielzahl von Teillichtbündeln aufgespalten wird, wobei die Anzahl der Teillichtbündel der Anzahl der stegartigen Vorsprünge entspricht.. Jeder der stegartigen Vorsprünge umfasst eine Reflexionsfläche, die so angeordnet ist, dass sie das auf sie auftreffende Teillichtbündel vorzugsweise durch Totalreflexion so zu einer Lichtaustrittsfläche des stegartigen Vorsprungs hin reflektiert, dass es durch diese im wesentlichen ohne Brechung seines Zentralstrahls hindurch tritt. Die Lichtaustrittsflächen der stegartigen Vorsprünge sind so ausgebildet und angeordnet, dass ihre Einhüllende dem Verlauf der Innenfläche der Heckscheibe folgt, so dass der Lichtleitkörper vorzugsweise mit Hilfe eines transparenten Klebers in lösbarer oder unlösbarer Weise direkt an der Innenfläche der Heckscheibe befestigt werden kann.

Die Brechungsindizes des Lichtleitkörpers, des transparenten Klebers und der Heckscheibe sind so aufeinander abgestimmt, dass beim Übergang eines jeden Teillichtbündels vom zugehörigen stegartigen Vorsprung durch den transparenten Kleber in die Heckscheibe der Zentralstrahl des Teillichtbündels im Wesentlichen keine Brechung erfährt.

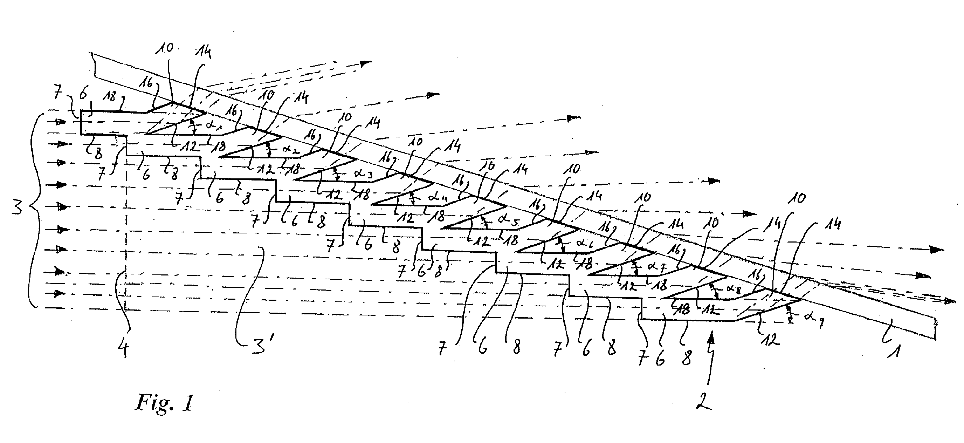

Die Reflexionsflächen können so ausgebildet sein, dass zumindest ihre Schnitte ein einer zur Quererstreckung der Bremsleuchte senkrechten Vertikalebene (, von denen die Fig. 1 einen wiedergibt,) jeweils eine Gerade bilden, deren Neigungswinkel bezüglich der Horizontalen so gewählt sind, dass die Teillichtbündel bei dem von innen her erfolgenden Auftreffen auf die Außenfläche der Heckscheibe keine Totalreflexion erfahren sondern aus der Heckscheibe unter vorbestimmten Brechungswinkeln austreten, die von den Neigungswinkeln der Reflexionsflächen gegen die Horizontale abhängen. Erfindungsgemäß werden zumindest einige der Neigungswinkel der verschiedenen Reflexionsflächen so voneinander verschieden gewählt, dass die Zentralstrahlen zumindest einiger der der aus der Heckscheibe austretenden Teillichtbündel mit der Horizontalen unterschiedliche Winkel einschließen und somit einen vorgebbaren vertikalen Winkelbereich in einer gewünschten Weise ausleuchten. Im Allgemeinen ist diese gewünschte Lichtverteilung durch gesetzliche Vorschriften festgelegt.

Vorteil dieser Konstruktion ist, dass bei steilen Anstellungen der Fresnel-Reflex, d. h. der Lichtanteil, der an der Innenseite zurück reflektiert wird, vernachlässigt werden kann, und dass die Weglängen des Lichts für die verschiedenen Winkel nahezu gleich sind. Hieraus resultiert, dass aufgrund der geringeren optischen Verluste weniger Licht benötigt wird als bei herkömmlichen hochgesetzten Bremsleuchten.

Eine erfindungsgemäße Alternative besteht darin, die Reflexionsflächen eines oder mehrerer der stegartigen Vorsprünge als Freiflächen auszubilden, deren Form zur Erzielung einer beliebigen Lichtverteilung des oder der betreffenden Teillichtbündel im Außenraum hinter dem Fahrzeug frei gewählt werden kann.

Vorteilhafte Weiterbildungen und Ausgestaltungen der Erfindung sind in den Unteransprüchen niedergelegt.

Die Erfindung wird im folgenden anhand eines Ausführungsbeispiels unter Bezugnahme auf die Zeichnung beschrieben; in dieser zeigt die einzige Figur einen stark schematisierten Vertikalschnitt durch eine erfindungsgemäße, hochgesetzte Bremsleuchte, der nur den Lichtleitkörper der Bremsleuchte sowie einen Teil der Heckscheibe des Fahrzeugs wiedergibt.

Gemäß Fig. 1 befindet sich im Fahrzeuginneren unmittelbar hinter der gegen die Horizontale unter einem spitzen Winkel geneigten Heckscheibe 1 eine erfindungsgemäße hochgesetzte Bremsleuchte, von der nur der speziell ausgeformte, transparente Lichtleitkörper 2 wiedergegeben ist.

Ohne dass dies im Einzelnen weiter dargestellt ist, umfasst die hochgesetzte Bremsleuchte weiterhin eine Optik, die das von einer Lichtquellenanordnung ausgehende Licht so beeinflusst, dass ein Lichtbündel 3 entsteht, das sich über die gesamte Breite (d. h. senkrecht zur Zeichenebene der Fig. 1) der hochgesetzten Bremsleuchte erstreckt und zumindest in vertikaler Richtung parallelisiert ist. Dieses Lichtbündel 3 tritt von hinten, d. h. von der von der Heckscheibe 1 abgewandten Seite her in den Lichtleitkörper 2 im Wesentlichen ohne Brechung ein und breitet sich in dessen Inneren als zumindest in vertikaler, vorzugsweise auch in horizontaler Richtung parallelisiertes Lichtbündel 3' parallel zur Horizontalen zur Heckscheibe 2 hin aus.

Prinzipiell könnte der Lichtleitkörper 2 auf der Lichteintrittsseite durch eine sich in etwa senkrecht zur Ausbreitungsrichtung des Lichtbündels 3 erstreckende, glatte Fläche begrenzt sein, wie dies in Fig. 1 durch eine vertikale gestrichelte Linie 4 angedeutet ist.

Bei einer bevorzugten Ausführungsform ist jedoch, wie in Fig. 1 durch durchgezogene Linien wiedergegeben, die Rückseite des Lichtleitkörpers 2 treppenförmig ausgebildet, wobei jede der Stufen 6 eine sich zur Ausbreitungsrichtung des Lichtbündels 3 senkrecht erstreckende als Lichteintrittsfläche dienende Stirnfläche 7 und eine sich in etwa parallel zur Ausbreitungsrichtung des Lichtbündels 3 erstreckende Begrenzungsfläche 8 umfasst. Dabei ist die Anordnung so getroffen, dass bei einer Projektion auf eine vertikale Ebene die vertikal übereinander liegenden Stirnflächen 7 unmittelbar aneinander anschließen und somit ein Äquivalent zur Fläche 4 darstellen.

Der Vorzug der gestuften Ausbildung liegt einerseits darin, dass sich für alle vertikal übereinander liegenden Teile des Lichtbündels 3 in etwa die gleiche Weglänge im Inneren des Lichtleitkörpers 2 ergibt, so dass jedes Teillichtbündel in etwa mit den gleichen Lichtverlusten behaftet ist. Darüber hinaus ergibt sich einerseits eine Materialersparnis und andererseits eine geringere Schwankung der Materialstärke in den verschiedenen Bereichen des Lichtleitkörpers 2, wodurch seine Spritzgussfertigung erleichtert wird, weil alle Bereiche eines frisch gespritzten Formlings in etwa gleich schnell abkühlen.

Wesentlich ist in jedem Fall, dass das zumindest in vertikaler Richtung parallele Lichtbündel 3 in den Lichtleitkörper 2 durch dessen Rückseite ohne Brechung eintritt und sich in dessen Inneren, in der gleichen Richtung wie vor dem Eintritt zur Heckscheibe 1 hin ausbreitet.

Jede der Stufen 6 geht auf ihrer der Lichtscheibe 1 zugewandten Seite in einen stegartigen Vorsprung 10 über, der bezüglich der Ausbreitungsrichtung des parallelisierten Lichtbündels 3 schräg nach oben zur Heckscheibe 1 hin geneigt ist. Dabei wird er von einer unter einem Winkel αₙ (n ist eine den betreffenden stegartigen Vorsprung 10 kennzeichnende, ganze Zahl) nach oben geneigten Reflexionsfläche 12 begrenzt, deren untere Fußlinie in vertikaler Richtung in der gleichen Höhe liegt, wie die Begrenzungsfläche 8 der zugehörigen Treppe 6. An das der Heckscheibe 1 zugewandte Ende der Reflexionsfläche 12 schließt sich eine nach oben und hinten geneigte Lichtaustrittsfläche 14 an, die gegen die Horizontale mit dem gleichen Winkel geneigt ist, wie die Heckscheibe 1.

An das obere hintere Ende der Lichtdurchtrittsfläche 14 schließt sich eine nach schräg hinten und unten geneigte Begrenzungsfläche 16 an, die in eine nach hinten verlaufende, horizontale, d. h. zur Ausbreitungsrichtung des Lichtbündels 3 in etwa parallele Begrenzungsfläche 18 übergeht, die sich (mit Ausnahme des obersten stegartigen Vorsprungs 10) bis zur Fußlinie der Reflexionsfläche 12 des jeweils darüber liegenden stegartigen Vorsprungs 10 erstreckt. Die Fußlinien, an denen die Reflexionsfläche 12 und die geneigte Begrenzungsfläche 16 eines stegartigen Vorsprungs 10 jeweils in die anschließende horizontale Begrenzungsfläche 18 übergehen, liegen vertikal mit einem Abstand übereinander, der gleich der Höhe der Stirnfläche 7 der zugehörigen Stufe 6 ist.

Auf diese Weise bildet jede der Stufen 6 mit der ihr zugewandten Eintrittsseite des zugehörigen stegartigen Vorsprungs 10 eine Aperturöffnung, die aus dem Lichtbündel 3 jeweils ein Teillichtbündel ausschneidet.

Da, wie oben erwähnt, die Stirnflächen 7 bei einer Parallelprojektion auf eine Vertikalebene unmittelbar aneinander anschließen, wird somit das gesamte Lichtbündel 3 in eine der Anzahl der Stufen 6 bzw. stegartigen Vorsprünge 10 entsprechende Anzahl von Teillichtbündeln unterteilt, ohne dass es dabei zu nennenswerten Lichtverlusten kommt, die ansonsten durch nicht genutzte Zwischenräume entstehen könnten.

Die Neigungswinkel α₁ bis α₉ der Reflexionsflächen 12 sind unterschiedlich, aber jeweils so gewählt, dass das auf die Reflexionsfläche 12 auftreffende Teillichtbündel nach schräg oben zur Heckscheibe 1 hin so reflektiert wird, dass sein Zentralstrahl mit der örtlichen Normalen der Heckscheibe 1 höchstens einen kleinen Winkel im Bereich von 5° bis 10° bildet, vorzugsweise aber zu dieser Normalen parallel verläuft. Dadurch tritt das an der jeweiligen Reflexionsfläche 12 eines jeden stegartigen Vorsprungs 10 reflektierte Teillichtbündel nahezu ohne Brechung in die Heckscheibe 1 über, was insbesondere dann der Fall ist, wenn, wie dies bevorzugt ist, die Brechungsindizes des Lichtleitkörpers 2 und der Heckscheibe 1 gleich sind oder sich nur geringfügig voneinander unterscheiden.

Die Reflexion des Teillichtbündels an den Reflexionsflächen 12 kann vorzugsweise durch Totalreflexion oder durch eine auf die Außenseite der Reflexionsfläche 12 aufgebrachte Spiegelschicht (nicht dargestellt) erfolgen. Auch ein gemischter Einsatz beider Reflexionsarten an ein und demselben Lichtleitkörper 2 ist möglich.

In der Fig. 1 ist weiterhin die bevorzugte Variante dargestellt, dass die Lichtaustrittsflächen 14 der stegartigen Vorsprünge 10 des Lichtleitkörpers 2 direkt an der Innenseite der Heckscheibe 1 anliegen und dort beispielsweise mit Hilfe eines transparenten Klebers befestigt sind, der in etwa den gleichen Brechungsindex besitzt, wie der Lichtleitkörper 2 und/oder die Heckscheibe 1. Somit wird der Lichtleitkörper 2 in mechanischer Weise unmittelbar von der Heckscheibe 1 getragen. Befestigt man die übrigen, in der Fig. 1 nicht dargestellten Teile der hochgesetzten Bremsleuchte am Lichtleitkörper 2, so dient die Heckscheibe 1 als Träger für die gesamte Bremsleuchte.

Die Neigungswinkel α₁ bis α₉ der Reflexionsflächen 12 sind unter Abstimmung auf den Brechungsindex die Heckscheibe 1 so gewählt, dass die Teillichtbündel bei dem von Innen her erfolgenden Auftreffen auf die Außenfläche der Heckscheibe 1 keine Totalreflexion erfahren und beim Austreten aus der Heckscheibe 1 in vertikaler Richtung gebrochen wird, wobei der jeweilige Brechungswinkel vom Neigungswinkel α₁ bis α₉ der zugehörigen Reflexionsfläche 12 abhängt. Durch die unterschiedliche Wahl dieser Winkel α₁ bis α₉ wird erreicht, dass beispielsweise die Teillichtbündel, die aus den vier oberen stegartigen Vorsprüngen 10 austreten, gegen die Horizontale nach oben geneigt sind, während das fünfte und das sechste Teillichtbündel in etwa horizontal verlaufen und das siebte bis neunte Teillichtbündel gegen die Horizontale nach unten geneigt sind. Somit lässt sich das zunächst zumindest in vertikaler Richtung parallelisierte, in den Lichtleitkörper 2 von hinten her eintretende Gesamtlichtbündel 3 durch die Wahl der Winkel α₁ bis α₉ in Teillichtbündel aufspalten, die nach dem Austreten aus der Heckscheibe 1 in vertikaler Richtung unterschiedlich so geneigt sind, dass sie einen beispielsweise durch gesetzliche Vorschriften geforderten Raumwinkelbereich ausleuchten.

Ein besonderer Vorteil ist dabei, dass die Weglängen all dieser Teillichtbündel sowohl im Lichtleitkörper 2 als auch durch die Heckscheibe 1 hindurch in etwa gleich lang sind, so dass insbesondere bei getönten Heckscheiben zwischen den einzelnen Teillichtbündeln keine durch unterschiedliche Weglängen bewirkten Intensitätsunterschiede auftreten.

In Fig. 1 ist die Heckscheibe 1 zumindest in dem Bereich, in welchem sie mit dem Lichtleitkörper 2 in Berührung steht, als ebene, in etwa planparallele Platte dargestellt. Sie könnte in diesem Bereich jedoch auch im Schnitt der Fig. 1 eine gleich bleibende oder variable Krümmung aufweisen, wobei dann die Lichtaustrittsflächen 14 des erfindungsgemäßen Lichtleitkörpers 2 an die Krümmung der Heckscheibe 1 im jeweiligen Berührungsbereich angepasst ausgeformt würden, um eine direkte Berührung und Befestigung des Lichtleitkörpers 2 an der Heckscheibe 1 zu ermöglichen.

Alternativ könnte der Lichtleitkörper 2 aber auch so angeordnet werden, dass die Lichtaustrittsflächen 14 zur Innenseite der Heckscheibe 1 einen gewissen Abstand aufweisen. Dies hätte allerdings zur Folge, dass der Lichtleitkörper 2 eine gesonderte mechanische Befestigung benötigen würde.

Es versteht sich weiterhin, dass die Anzahl der stegartigen Vorsprünge 10 nicht auf neun beschränkt ist. Es ist in das Belieben des Fachmanns gestellt, eine größere oder auch eine kleinere Anzahl von stegartigen Vorsprüngen 10 vorzusehen.

Senkrecht zur Zeichenebene der Fig. 1 kann die Heckscheibe 1 entweder eben oder gekrümmt ausgebildet sein. Die Form des Lichtleitkörpers 2 ist dann entsprechend angepasst.

Wesentlich für die Erfindung ist, dass bei allen Ausführungsformen die Heckscheibe 1 in Verbindung mit dem speziell ausgebildeten Lichtleitkörper 2 eine abbildende Funktion übernimmt, die für eine gewünschte Raumwinkelverteilung des zunächst zumindest in vertikaler Richtung parallelisierten Lichtbündels 3 sorgt.

Alternativ zu der dargestellten und beschriebenen Ausführungsform ist es auch möglich, die optischen Einrichtungen, die dazu dienen, das von der Lichtquellenanordnung kommende Licht zu parallelisieren, mit dem Lichtleitkörper 2 einstückig auszubilden, und sie dabei auf seiner in Figur 1 links liegenden Seite anzuordnen und so auszubilden, dass sie ein von links kommendes divergentes und/oder konvergentes Lichtbündel so umformt, dass es sich danach im Inneren des Lichtleitkörpers 2 als zumindest in vertikaler Richtung parallelisiertes Lichtbündel zu den Reflexionsflächen 12 hin ausbreitet.

## Patentansprüche

1. Hochgesetzte Bremsleuchte für ein Fahrzeug, insbesondere Kraftfahrzeug, die im Fahrzeuginneren hinter einer Heckscheibe (1) mit zueinander in etwa parallelen Hauptflächen angeordnet ist und ihr von einer Lichtquellenanordnung erzeugtes Licht durch diese Heckscheibe (1) hindurch abgibt, wobei die Heckscheibe (1) gegen die Horizontale so geneigt ist, dass sie mit dieser einen spitzen Winkel einschließt,
**dadurch gekennzeichnet,**
**dass** die Bremsleuchte einen Lichtleitkörper (2) umfasst, in den das von der Lichtquellenanordnung kommende Licht so eingekoppelt wird, dass es sich in seinem Inneren als ein zumindest in vertikaler Richtung parallelisiertes Lichtbündel (3') in etwa parallel zur Horizontalen zur Heckscheibe (1) hin ausbreitet,
**dass** der Lichtleitkörper (2) auf seiner der Heckscheibe (1) zugewandten Vorderseite eine Vielzahl von stegartigen, in vertikaler Richtung übereinander angeordneten Vorsprüngen (10) aufweist, von denen sich jeder in horizontaler Richtung im wesentlichen über die gesamte Breite der hochgesetzten Bremsleuchte erstreckt und von denen jeder folgendes umfasst:
eine Reflexionsfläche (12), die gegen die Horizontale um einen vorgebbaren Winkel (α₁..... α₉) geneigt ist, und
eine in etwa mit dem gleichen Winkel wie die Heckscheibe (1) gegen die Horizontale geneigte Lichtaustrittsfläche (14),
und **dass** der vorgebbare Winkel (α₁... .. α₉), um den die Reflexionsfläche (12) gegen die Horizontale geneigt ist, so gewählt ist, dass der von der Reflexionsfläche (12) reflektierte Teil des parallelisierten Lichtbündels (3') nahezu ohne Brechung durch die Lichtaustrittsfläche (14) hindurch und in die Heckscheibe (1) eintritt und in dieser von innen her auf die äußere Hauptfläche mit einem solchen Winkel auftrifft, dass an dieser keine Totalreflexion entsteht.

2. Hochgesetzte Bremsleuchte nach Anspruch 1, **dadurch gekennzeichnet, dass** jeder der stegartigen Vorsprünge (10) weiterhin eine zur Reflexionsfläche (12) in etwa parallele, geneigte Begrenzungsfläche (16) umfasst, an die sich eine in etwa horizontale Begrenzungsfläche (18) anschließt.

3. Hochgesetzte Bremsleuchte nach Anspruch 1 oder 2, **dadurch gekennzeichnet, dass** bei wenigstens einem der stegartigen Vorsprünge (10) der vorgebbare Winkel, unter dem Reflexionsfläche (12) gegen die Horizontale geneigt ist, so gewählt ist, dass der auf die Reflexionsfläche (12) auftreffende Teil des parallelisierten Lichtbündel (3')s durch Totalreflexion reflektiert wird.

4. Hochgesetzte Bremsleuchte nach einem der Ansprüche 1 bis 3, **dadurch gekennzeichnet, dass** bei wenigstens zwei der stegartigen Vorsprünge (10) die vorgebbaren Winkel (α₁..... α₉), mit denen die jeweilige Reflexionsfläche (12) gegen die Horizontale geneigt ist, voneinander verschieden sind.

5. Hochgesetzte Bremsleuchte nach Anspruch 4, **dadurch gekennzeichnet, dass** für einige der im eingebauten Zustand im oberen Bereich der Bremsleuchte befindlichen, stegartigen Vorsprünge (10) die vorgebbaren Winkel (α₁..... α₅), mit denen die Reflexionsflächen (12) dieser Vorsprünge (10) gegen die Horizontale geneigt sind, so gewählt sind, dass das zugehörige, aus der Heckscheibe (1) austretende Teillichtbündel gegen die Horizontale nach oben geneigt ist.

6. Hochgesetzte Bremsleuchte nach Anspruch 4 oder 5, **dadurch gekennzeichnet, dass** für einige der im eingebauten Zustand im mittleren Bereich der Bremsleuchte befindlichen, stegartigen Vorsprünge (10) die vorgebbaren Winkel (α₆, α₇), mit denen die Reflexionsflächen (12) dieser Vorsprünge (10) gegen die Horizontale geneigt sind, so gewählt sind, dass das zugehörige, aus der Heckscheibe (1) austretende Teillichtbündel in etwa horizontal verläuft.

7. Hochgesetzte Bremsleuchte nach einem der Ansprüche 5 bis 6, **dadurch gekennzeichnet, dass** für einige der im eingebauten Zustand im unteren Bereich der Bremsleuchte befindlichen, stegartigen Vorsprünge (10) die vorgebbaren Winkel (α₈, α₉), mit denen die Reflexionsflächen (12) dieser Vorsprünge (10) gegen die Horizontale geneigt sind, so gewählt sind, dass das zugehörige, aus der Heckscheibe (1) austretende Teillichtbündel gegen die Horizontale nach unten geneigt ist.

8. Hochgesetzte Bremsleuchte nach Anspruch 2, **dadurch gekennzeichnet, dass** bei wenigstens einem der stegartigen Vorsprünge (10) die Reflexionsfläche (12) als Freifläche ausgebildet ist, deren Form zur Erzielung einer gewünschten Lichtverteilung des betreffenden Teillichtbündels im Außenraum hinter der Heckscheibe (1) ausgebildet ist.

9. Hochgesetzte Bremsleuchte nach einem der vorhergehenden Ansprüche, **dadurch gekennzeichnet, dass** die Geometrie der stegartigen Vorsprünge (10) so gewählt ist, dass bei einer von hinten her durch die Heckscheibe (1) hindurch erfolgenden Betrachtung die Lichtaustrittsflächen (14) einander benachbarter Vorsprünge (10) in Projektion auf eine Vertikalebene unmittelbar aneinander anschließend erscheinen.

10. Hochgesetzte Bremsleuchte nach einem der vorhergehenden Ansprüche, **dadurch gekennzeichnet, dass** der Lichtleitkörper (2) mit seinen Lichtaustrittsflächen (14) die Innenseite der Heckscheibe (1) berührt.

11. Hochgesetzte Bremsleuchte nach Anspruch 10, **dadurch gekennzeichnet, dass** der Lichtleitkörper (2) mit seinen Lichtaustrittsflächen (14) an der Innenseite der Heckscheibe (1) befestigt ist.

12. Hochgesetzte Bremsleuchte nach einem der vorhergehenden Ansprüche, **dadurch gekennzeichnet, dass** der Lichtleitkörper (2) auf seiner Rückseite stufenförmig ausgebildet ist, wobei jede der rechtwinkeligen Stufen (6) eine zur Ausbreitungsrichtung des Lichtbündels (3') parallele, untere Begrenzungsfläche (8) und eine hierzu senkrechte, als Lichteintrittsfläche dienende Stirnfläche (7) aufweist.

13. Hochgesetzte Bremsleuchte nach Anspruch 12, **dadurch gekennzeichnet, dass** jedem der stegartigen Vorsprünge (10) auf der Vorderseite des Lichtleitkörpers (2) eine Stufe (6) auf der Rückseite des Lichtleitkörpers (2) entspricht.

14. Hochgesetzte Bremsleuchte nach einem der vorhergehenden Ansprüche, **dadurch gekennzeichnet, dass** zwischen der Lichtquellenanordnung und dem Lichtleitkörper (2) eine gesonderte optische Einrichtung vorgesehen ist, die das von der Lichtquellenanordnung kommende Licht zumindest in vertikaler Richtung parallelisiert und so auf die von der Heckscheibe (1) abgewandte Rückseite des Lichtleitkörpers (2) projiziert, dass es in diesen im wesentlichen ohne vertikale Brechung eintritt.

15. Hochgesetzte Bremsleuchte nach einem der Ansprüche 1 bis 13, **dadurch gekennzeichnet, dass** das von der Lichtquellenanordnung kommende Licht auf eine mit dem Lichtleitkörper (2) einstückig ausgebildete und auf seiner von der Heckscheibe (1) abgewandten Rückseite angeordnete optische Einrichtung auftrifft, die dieses Licht so beeinflusst, dass es sich im Inneren des Lichtleitkörpers (2) zumindest in vertikaler Richtung parallelisiert zur Heckscheibe (1) hin ausbreitet.

16. Hochgesetzte Bremsleuchte nach einem der vorhergehenden Ansprüche, **dadurch gekennzeichnet, dass** das sich im Inneren des Lichtleitkörpers (2) zur Heckscheibe (1) hin ausbreitende Licht auch in horizontaler Richtung parallelisiert ist.
